# EUROPEAN PATENT SPECIFICATION

(11) **EP 4 334 165 B1**
(45) Date of publication and mention of the grant of the patent: **29.01.2025**
(21) Application number: 22718810.9
(22) Date of filing: 20.04.2022
(51) Int. Cl.: B60L 53/80, B62M 6/90, B62J 43/16, B62J 43/28, B62J 9/14

(54) **ELECTRIC OR HYBRID RIDEABLE SADDLE VEHICLE COMPRISING AN EXTRACTABLE RECHARGEABLE BATTERY AND A BATTERY LOCKING DEVICE**
ELEKTRISCHES ODER HYBRIDES FAHRBARES SATTELFAHRZEUG MIT EINER AUSZIEHBAREN WIEDERAUFLADBAREN BATTERIE UND BATTERIEVERRIEGELUNGSVORRICHTUNG
VÉHICULE À SELLE À ENFOURCHER ÉLECTRIQUE OU HYBRIDE COMPRENANT UNE BATTERIE RECHARGEABLE EXTRACTIBLE ET UN DISPOSITIF DE VERROUILLAGE DE BATTERIE

(30) Priority: 05.05.2021 IT 202100011432
(43) Date of publication of application: 13.03.2024
(73) Proprietor: Piaggio & C. SpA, 56025 Pontedera (IT)
(72) Inventor: GUIDI, Emiliano, 56025 Pontedera (IT); CUTRI', Niccolò, 56025 Pontedera (IT)
(74) Representative: Carangelo, Pierluigi
(86) International application number: PCT/IB2022/053683
(87) International publication number: WO 2022/234375

(56) References cited:
- EP-A1- 1 389 552
- EP-A1- 2 168 862
- EP-A1- 2 623 404
- EP-A1- 2 871 125
- EP-A1- 3 670 311
- EP-A1- 3 838 725
- EP-A1- 3 900 967
- EP-A2- 3 088 286
- WO-A1-2019/064556
- WO-A1-2019/064605
- WO-A1-2020/065865
- WO-A1-2020/065868
- WO-A1-2020/194985
- WO-A1-2021/005765
- WO-A1-2021/005767
- JP-A- 2011 136 626
- JP-A- H05 105 145
- US-A1- 2015 122 570
- US-A1- 2015 127 206

## Description

### TECHNICAL FIELD OF THE INVENTION

The present invention relates to the technical field of rideable saddle vehicles, and particularly relates to an electric or hybrid rideable saddle vehicle comprising a removable rechargeable battery and a battery locking device. The present Patent Application claims the priority of Italian Patent Application No. 102021000011432 dated 05/05/2021.

### BACKGROUND OF THE INVENTION

JP 2011 136626 discloses the preamble of claim 1.

With the introduction of electric or hybrid rideable saddle vehicles, the need has arisen to accommodate at least one rechargeable battery onboard such vehicles. Such a rechargeable battery provides the electrical power required to supply the traction motor so that it delivers a drive torque. Generally, the rechargeable battery is required to be easily removable from a respective housing seat so that a user may easily remove the rechargeable battery from the vehicle to replace it and/or recharge it.

As is known, some types of rideable saddle vehicles, such as motorcycles, for example, in particular but not only motor scooters with two or more wheels, comprise a storage container integrated in the body of the vehicle and arranged below the rideable saddle thereof. Here, the rideable saddle is a closing element of the storage container and may selectively take an opening configuration for allowing access to the housing seat and a closing configuration for preventing access to the housing seat. In some types of rideable saddle vehicles of the above-described type, the rechargeable battery is extractable and accommodated in a housing seat defined inside the storage container.

As is known, in order to ensure satisfactory autonomy or power, the rechargeable battery of an electric or hybrid rideable saddle vehicle usually is cumbersome and has a large mass. Therefore, there is a need for the rechargeable battery to be kept in a stable position inside the housing seat thereof in order to prevent possible vibrations, noise, and jolts of the rechargeable battery when using, for example when driving, the vehicle. For this reason, locking systems of the rechargeable battery comprising, for example, one or more locking belts or locking hooks or brackets are provided onboard the aforesaid vehicles.

The locking systems of the known art have several drawbacks. In some cases, indeed, they are complex and costly, in other cases they do not allow an easy and quick removal of the rechargeable battery, or in other cases again, they do not ensure keeping the rechargeable battery in a stable position when using the vehicle.

An example of battery locking system of the prior art is provided by document WO2020194985A1, which describes a locking device of the battery, in particular of the handle thereof. This locking system does not allow closing the saddle if the locking device is not in the locking position of the battery, rather forces the vehicle user to apply force for positioning the locking device in the locking position of the battery.

A further known solution example is provided by document EP2873599B1, which describes a motorcycle provided with a door for closing the battery compartment provided with a closing system. The motorcycle saddle then independently rests on this door provided with a locking system.

It is a general object of the present description to provide an electric or hybrid rideable saddle vehicle with removable rechargeable battery which is capable of completely or at least partially overcoming the drawbacks of the above-described vehicles of the known art.

Such an object is achieved by a rideable saddle vehicle, as generally defined in claim 1. Preferred and advantageous embodiments of the aforesaid vehicle are defined in the appended dependent claims.

The invention will be better understood from the following detailed description of particular embodiments thereof, given by way of non-limiting example, with reference to the accompanying drawings briefly described in the following paragraph.

### BRIEF DESCRIPTION OF THE DRAWINGS

In the accompanying drawings:
- Figure 1 shows a side plan view of a non-limiting embodiment of a rideable saddle vehicle comprising a storage container integrated in the body of the rideable saddle vehicle;
- Figure 2 shows a diagrammatic sectional view of a part of the vehicle in Figure 1, in which a non-limiting embodiment of the storage container is shown;
- Figure 3 shows a diagrammatic view of a possible internal subdivision of the storage container in a plurality of housing seats;
- Figure 4 shows an axonometric view of a part of the vehicle in Figure 1 in which the storage container is shown in an opening configuration which shows the inside of the container and a locking device arranged inside the container, in which the locking device is shown in a locking position;
- Figure 5 shows an axonometric view similar to that shown in Figure 4, in which the locking device is shown in a releasing position;
- Figure 6 is an axonometric view of the locking device in Figure 4;
- Figure 7 is a side plan view of the locking device in Figure 4;
- Figure 8 is a partial perspective view of the vehicle in Figure 1, with parts sectioned so as to show the inside of the storage container when the container is in the closing configuration;
- Figure 9 is an axonometric view similar to that shown in Figure 4, in which an enlarged part of Figure 4 is shown.

### DETAILED DESCRIPTION

The same or similar elements are indicated by the same reference signs in the accompanying drawings.

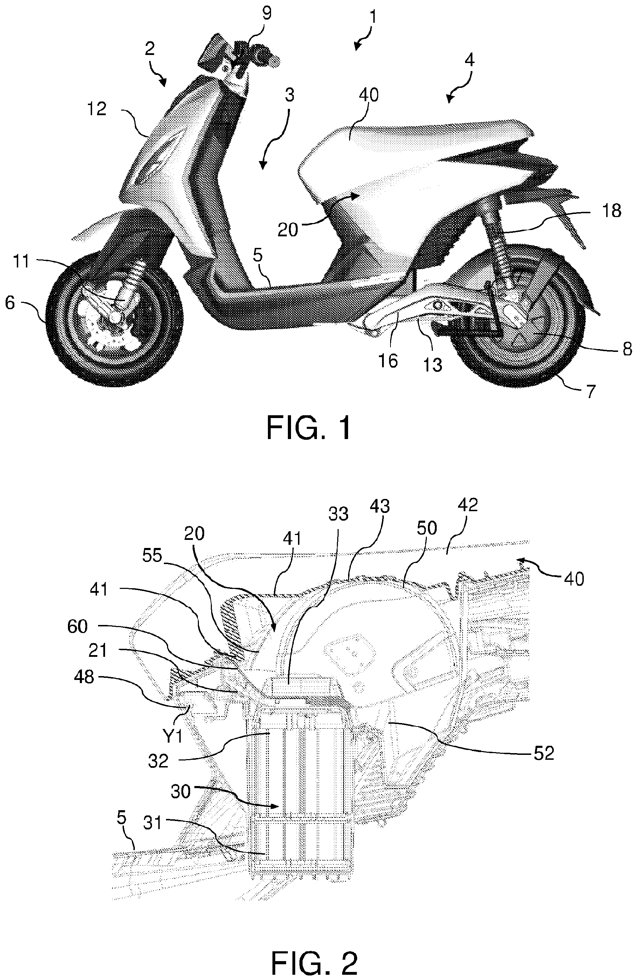

Figure 1 shows an embodiment of an electric or hybrid rideable saddle vehicle 1 which is embodied, in the particular example shown and without however introducing any limitation, by a two-wheeled motorcycle, and in particular by a two-wheeled scooter, having a front wheel 6 and a rear wheel 7.

Hereinafter, in the present description, without however introducing any limitation, reference will be made to a general motorcycle 1, meaning that the following description can be generally applied to any type of electric or hybrid rideable saddle vehicle comprising:
- a main body 2, 3, 4;
- at least two wheels 6, 7 constrained to the main body 2, 3, 4;
- a motor 8, in particular, an electric or hybrid traction motor operatively connected to, or integrated in, at least one of the two wheels 6, 7.

In the particular example shown in Figure 1, the rideable saddle vehicle 1 is an electric vehicle and comprises, without however introducing any limitation, an electric motor 8 integrated in at least one of the two wheels 6, 7, in the example integrated in the rear wheel 7. In other words, in this example, the electric motor 8 is a hub motor. The assembly consisting of the rear wheel 7, and in particular of the wheel hub and the electric motor 8, is a drive wheel 7, 8.

The main body 2, 3, 4 of motorcycle 1 has a front part 2, a tail part 4, and a middle part 3 interposed between the front part 2 and the tail part 4.

The middle part 3 comprises a footboard 5, for example, on which a rider can place his/her feet.

In the example, the front part 2 comprises a front shield 12, a steering handlebar 9, the front wheel 6, a front suspension 11.

In the example, the tail part 4 comprises a rideable saddle 40, the drive wheel 7, 8, a support arm or fork 16 of the drive wheel 7, 8, a rear suspension 18.

The motorcycle 1 further comprises a storage container 20 integrated in the main body 2, 3, 4, preferably in the tail part 4 of motorcycle 1.

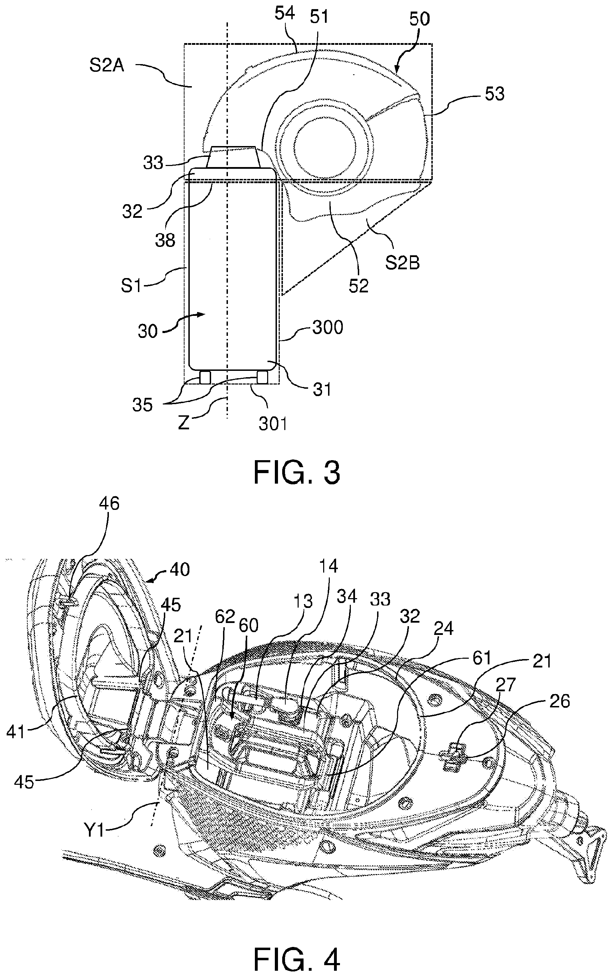

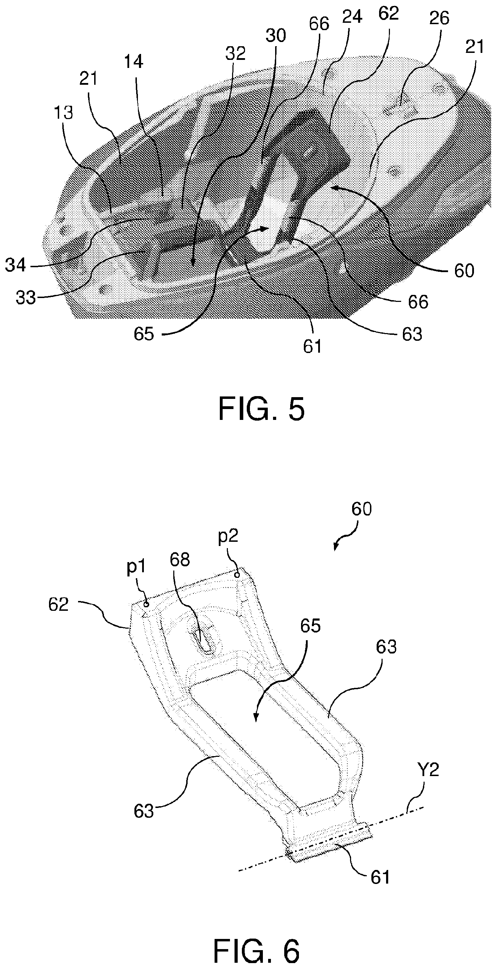

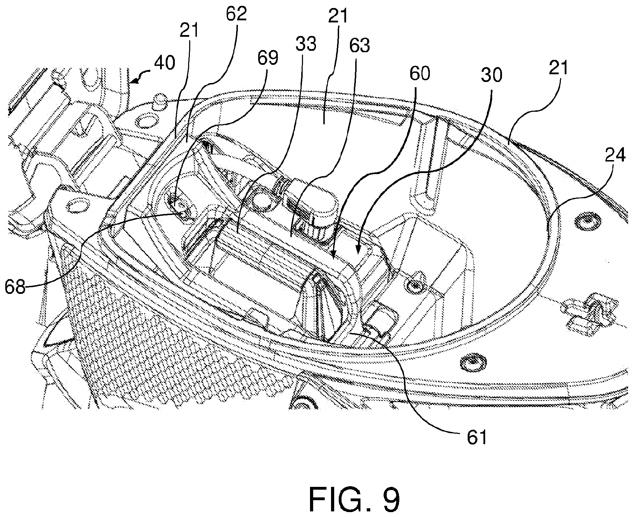

The storage container 20 is arranged below the rideable saddle 40. The rideable saddle 40 can be moved between a closing configuration, in which the rideable saddle 40 prevents access to the storage container 20, and an opening configuration, in which the rideable saddle 40 allows access to the storage container 20. Therefore, in such an embodiment, the rideable saddle 40 is a closing element of the storage container 20. The rideable saddle 40, in particular in the closing configuration, reversibly obstructs an upper access opening 24 of the storage container 20. The rideable saddle 40 in Figures 1, 2 and 8 is shown in the closing configuration, while it is shown in the opening configuration in Figures 4 and 9. The rideable saddle 40 was instead omitted in Figure 5.

According to an advantageous embodiment, the rideable saddle 40 is hinged to the main body 2, 3, 4 of motorcycle 1 to be rotated about a first rotation axis Y1 (Figure 2 and Figure 4), between two positions angularly spaced apart from each other, corresponding to the closing configuration and to the opening configuration, respectively. In the example depicted in the drawings, motorcycle 1 comprises a first cylindrical hinge 48 (Figure 2) adapted and configured to rotatably hinge an end portion of the rideable saddle 40 to the tail portion 4 of motorcycle 1 so that the rideable saddle 40 is rotatable about the first rotation axis Y1, which thus represents the hinge axis. Said end portion preferably is a front end portion of the rideable saddle 40, i.e., an end portion facing the front part 2 of the main body 2, 3, 4 of motorcycle 1.

Motorcycle 1 preferably comprises a locking system 26, 46 of the rideable saddle 40 (Figure 4) which can be operated to take a locking configuration for locking the rideable saddle 40 in the closing configuration, and a releasing configuration to allow the rideable saddle 40 to be brought from the closing configuration to the opening configuration. The locking system 26, 46 of the rideable saddle 40 comprises, for example, a lock 26 having a movable catch 27 and an engagement element 46 with which the movable catch 27 is engaged when the locking system 26, 46 is in the locking configuration. For example, lock 26 can be operated by means of a key and/or by means of a mechanical or electromechanical button and/or by means of an electrical control signal. In the particular embodiment shown for example in Figure 4, the engagement element 46 is provided on the rideable saddle 40 and lock 26 is provided on the main body 2, 3, 4 of motorcycle 1, in particular on the tail part 4. In a constructional variant, the positions of the aforesaid elements of the locking system 26, 46 could be inverted with one another.

The motorcycle 1 further comprises at least one extractable rechargeable battery 30, as better shown in Figures 2, 3 and 4. A user may thus remove the rechargeable battery 30 to be recharged and replace it with a charged rechargeable battery 30, for example.

The rechargeable battery 30 is operatively connected, for example by means of an electric wire 13 (Figure 5), to motor 8 to supply it so that it can deliver a drive torque. The rechargeable battery 30 preferably comprises an electrical connector 34 adapted to be engaged, for example by coupling, with a complementary electrical connector 14 provided at a free end of the electric wire 13.

As shown in Figure 3, the rechargeable battery 30 extends between a bottom portion 31 and a head portion 32. For example, the rechargeable battery 30 comprises a containment body made of an electrically insulating material which accommodates a plurality of rechargeable cells therein. The bottom portion 31 is a first end portion of the containment body and the head portion 32 is a second end portion of the containment body, opposite to the first end portion. For example, the containment body of the rechargeable battery 30 is prism-shaped, e.g., it has a general polygonal shape, in particular is parallelepiped-shaped, for example a straight parallelepiped. Rubber tips or feet 35 for damping any impacts to battery 30 can be arranged below the bottom portion 31. These rubber tips or feet 35 can alternatively be arranged on motorcycle 1.

The rechargeable battery 30 preferably comprises a gripping handle 33, preferably included in, or fixed to, the head portion 32. The gripping handle 33 preferably protrudes from the head portion 32, and more preferably is C-shaped, with two side support arms and a middle gripping part, for example for ergonomic gripping, interposed between the two side arms. For example, the two side arms are mutually inclined and the middle part is cylindrical in shape, for example.

The storage container 20 comprises a first housing seat S1 which at least partially houses the rechargeable battery 30 so that the rechargeable battery 30 can be inserted into, and extracted from, the first housing seat S1. Preferably, the rechargeable battery 30 is slidably insertable into, and slidably extractable from, the first housing seat S1 by translation along a sliding axis Z. In particular, the housing seat S1, with the rechargeable battery 30, substantially defines a shape coupling.

The first housing seat S1 is preferably delimited by a tubular side wall 300 and a bottom wall 301 joined to the tubular side wall 300. The first housing seat S1 preferably comprises guiding means, e.g., guides which allow directing the insertion/removal of the rechargeable battery 30 into/from the first housing seat S1. The user is thus facilitated in placing the battery 30 in a correct position in the first housing seat S1. In detail, the first housing seat S1 and/or the rechargeable battery 30 are shaped so as to avoid the rechargeable battery 30 from being mounted in a wrong position or with a wrong orientation. In particular, the first housing seat S1 and the rechargeable battery 30 mutually form a shape coupling which defines a unique position between the first housing seat S1 and the rechargeable battery 30.

Preferably, the storage container 20 further comprises a second housing seat S2A, S2B, adapted and configured to house at least one helmet 50, preferably a jet-type helmet, i.e., a helmet without a fixed chin guard.

The storage container 20 can comprise a shell 21 shaped to delimit and define the lower portion of the compartment in which the first housing seat S1 and the second housing seat S2A, S2B are obtained. The compartment is then closed at the top by a support base 41 of saddle 40.

According to an advantageous embodiment, the second housing seat S2A, S2B has a first housing portion S2A and a second housing portion S2B, which are adjacent to each other. When the rechargeable battery 30 is inserted into the first housing seat S1, the first housing portion S2A at least partially extends over the head portion 32 of the rechargeable battery 30 and the second housing portion S2B at least partially extends laterally with respect to the head portion 32 of the rechargeable battery 30. The volume in the storage container 20 reserved for housing the rechargeable battery 30 thus forms a step close to which a front portion of helmet 50 can rest, e.g., an open front portion 51 of a jet helmet 50. Thereby, both a rechargeable battery 30 and a helmet 50 can be simultaneously housed in the storage container 20 even when the space onboard the motorcycle 1 reserved for the storage container 20 is relatively small.

According to a particularly advantageous embodiment, the head portion 32 of the rechargeable battery 30 at least partially protrudes into the second housing seat S2A, S2B, in particular into the first housing portion S2A. For example, if the head portion 32 of the rechargeable battery 30 comprises the gripping handle 33, when the rechargeable battery 30 is inserted into the first housing seat S1, the gripping handle 33 at least partially protrudes into the second housing seat S2A, S2B, in particular into the first housing portion S2A. The depth of the first housing seat S1, i.e., of the housing seat reserved for the rechargeable battery 30, can thus be reduced because, for housing the head portion 32 and/or the gripping handle 33 of the rechargeable battery 30, a relatively limited part of the housing volume of the second housing seat S2A, S2B can be utilized by utilizing the remaining part of the latter to house helmet 50.

According to an advantageous embodiment, the first housing seat S1 and the second housing seat S2A, S2B communicate with each other. For example, the first housing seat S1 comprises an access opening 38 which is crossable by the bottom portion 31 of the rechargeable battery 30 to insert the latter into the first housing seat S1. The first housing seat S1 and the second housing seat S2A, S2B communicate with each other through the access opening 38. For example, the access opening 38 is an opening arranged on the opposite side with respect to the bottom wall 301.

According to an embodiment, the storage container 20 is adapted and configured to house a jet helmet 50. As shown in Figure 3, the jet helmet 50 comprises a shell having a front open portion 51, two opposite side portions 52, a rear portion 53, and an upper portion 54. The front open portion 51 of the shell is joined to the rear portion 53 of the shell by means of the side portions 52, while the upper portion 54 of the shell is above the front open portion 51, the side portions 52, and the rear portion 53.

Advantageously, the first portion S2A of the second housing seat S2A, S2B is adapted and configured to house the front open portion 51 of the shell. According to a particularly advantageous embodiment, the jet helmet 50 comprises at least one visor 55 (shown only in Figure 2), and the first portion S2A of the second housing seat S2A, S2B is also adapted and configured to house the visor 55. As known per se, visor 55 is a transparent or semitransparent shield rotatably constrained to the shell and can be rotated from the outside of the shell to obstruct at least partially the front open portion 51 of the shell in a removable manner.

According to a particularly advantageous embodiment, the second portion S2B of the second housing seat S2A, S2B is adapted and configured to house at least partially the side portions 52 of the shell of the jet helmet 50.

According to an advantageous embodiment which allows increasing the useful space inside the storage container 20, the rideable saddle 40 comprises (Figure 2) a support base 41 and a padding 42, and the support base 41 comprises a recess 43 adapted and configured to receive part of the upper portion 54 of the shell of helmet 50 when the storage container 20 accommodates a helmet 50 therein. Thereby, the first portion S2A of the second housing seat S2A, S2B advantageously partially extends into saddle 40. The aforesaid recess 43 preferably extends into the thickness of padding 42. For example, the support base 41 is a frame made of hard plastics and/or metal, and the padding is made of a yielding material, such as a spongy synthetic material. As known per se, padding 42 is covered with a waterproof coating, e.g., made of natural or synthetic leather. According to a particularly advantageous embodiment, the aforesaid recess 43 is a rounded and/or curved recess.

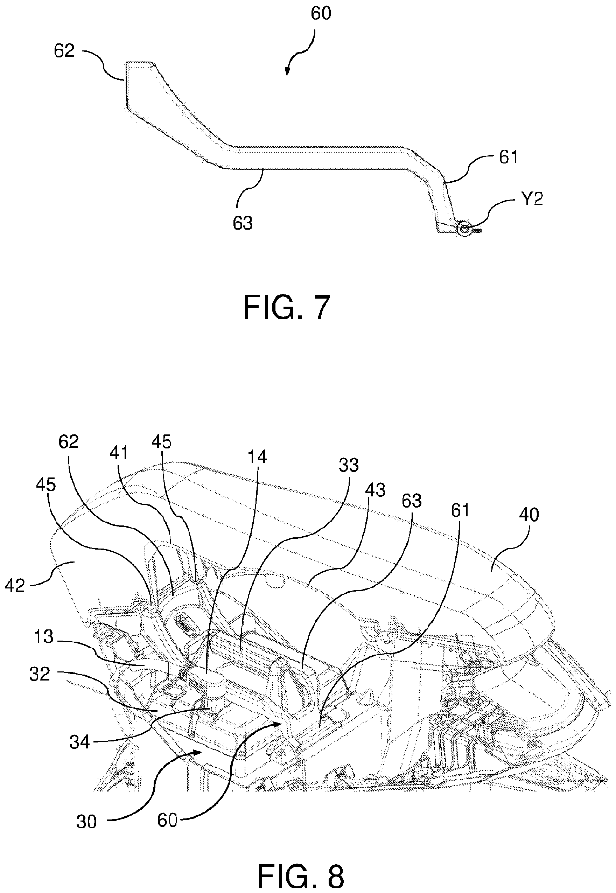

The motorcycle 1 further comprises a locking device 60 (shown in greater detail in Figures 5, 6, 7, 8 and 9) adapted to lock the rechargeable battery 30 in the first housing seat S1. The locking device 60 is adapted and configured to be moved in order to take an operating locking position and an operating releasing position. The locking device 60 is retained in the operating locking position by means of a thrust force applied by the rideable saddle 40 to the locking device 60 when the rideable saddle 40 takes the closing configuration. In the operating locking position shown for example in Figures 4 and 8, the locking device 60 prevents the rechargeable battery 30 from being removed from the first housing seat S1. Instead, in the operating releasing position shown in Figure 5, the locking device 60 allows the removal, in particular the extraction, of the rechargeable battery 30 from the first housing seat S1, and thus from the storage container 20.

According to a particularly advantageous embodiment, the locking device 60 is accommodated in the storage container 20 and has a first end portion 61 rotatably hinged, by means of a hinge, to a wall of the storage container 20, and a second end portion 62, opposite to the first end portion 61, which is a free end portion when in the operating releasing position. The first end portion 61 is rotatable about a second rotation axis Y2 (Figure 6), which is preferably parallel to the first rotation axis Y1, i.e., to the rotation axis of the rideable saddle 40. According to a particularly advantageous embodiment, of the first end portion 61 and the second end portion 62 of the locking device 60, the first end portion 61 is the furthest from the first rotation axis Y1 when the locking device 60 is in the operating locking position.

The vehicle 1 may comprise, at the hinge of the first end portion 61, an elastic return means (not shown in the drawings) adapted to push the locking device 60 towards the operating locking position. Preferably, the elastic return means can be a torsional spring connected to the locking device 60 and to the shell 21 of the storage container 20.

As shown in Figures 2 and 8, in the operating locking position of the locking device 60, the rideable saddle 40 abuts against the second end portion 62 and applies a pressure force to the latter, for example by means of at least one thrust element 45. For example, the thrust element 45 is integrated in, or fastened to, the support base 41 of the rideable saddle 40. Conveniently, the thrust element 45 protrudes from the rideable saddle 40, in particular from the support base 41, towards the storage container 20, preferably so as to cross the upper access opening 24.

The locking device 60 is kept in the operating locking position thereof, which prevents the removal of battery 30, only by means of the thrust applied by the rideable saddle 40 when the rideable saddle abuts with the locking device 60. This allows making vehicle 1 more affordable because battery 30 remains firmly connected to vehicle 1 by means of the locking device 60 alone, without needing further locking systems of the locking device 60. Moreover, this solution allows locking battery 30 without any effort by the user of vehicle 1 because the locking device 60 is autonomously and automatically released by simply bringing saddle 40 to the closing position.

The locking device 60 is shaped so as to remain pinched between the bottom of the rideable saddle 40, in particular the support base 41 thereof, and the storage container 20, in particular the shell 21 thereof. The support base 41 of the rideable saddle 40 thus rests on the shell 21 of the storage container 20 by means of the locking device 60, thus improving the discharge of the rider's and passenger's weight onto the remainder of the motorcycle and ensuring a firm anchoring of the locking device 60, and therefore of battery 30.

In the particular non-limiting embodiment shown in the drawings, the rideable saddle 40 comprises two thrust elements 45 spaced apart from each other. In the closing configuration of the rideable saddle 40, the two thrust elements 45 abut against the second end portion 62 of the locking device 60, applying a pressure force to the latter in two contact points p1, p2 spaced apart from each other.

The locking device 60 preferably comprises at least one locking arm 63 which extends between the first end portion 61 and the second end portion 62. In the operating locking position, the at least one locking arm 63 applies a thrust force to the rechargeable battery 30, in particular to the head portion 32. The rechargeable battery 30 is thus kept in a stable position inside the first housing seat S1 and possible vibrations, noise, and jolts of the rechargeable battery 30 when using, for example when driving, the motorcycle 1 are eliminated.

Referring now to Figure 7, according to a particularly advantageous embodiment, the first end portion 61 and the second end portion 62 of the locking device 60 projects towards sides which are arranged to be mutually opposite with respect to the locking arm 63, so that the locking device 60 has an overall S- or step-shaped lateral profile.

According to an advantageous and non-limiting embodiment, the locking device 60 comprises two locking arms 63 which are joined to each other on one side by the first end portion 61 and on another side by the second end portion 62.

According to a particularly advantageous embodiment, the locking device 60 comprises at least one recess or a through opening 65 (Figure 6) which accommodates, or is crossed by, a protruding part of the rechargeable battery 30 in the operating locking position of the locking device 60. Such a protruding part preferably is the gripping handle 33. For example, the aforesaid recess or through opening 65 extends into the locking arm 63 or between the locking arms 63.

According to a particularly advantageous embodiment, when the locking device 60 takes the operating locking position, at least one elastically yielding element 66 (Figure 5), for example a yielding block 66, is interposed and sandwiched between the locking device 60 and the rechargeable battery 30. For example, the yielding block 66 is made of an elastically deformable material, such as rubber, latex, or silicone, for example.

In the embodiment shown in Figure 5, the at least one elastically yielding element 66 is fastened to the locking device 60. In a constructional variant, the elastically yielding element 66 is fastened to the rechargeable battery 30, for example in the head portion 32 thereof. In a further variant, such an elastically yielding element 66 is a free element, for example a yielding pad, which can be interposed between the rechargeable battery 30 and the locking device 60. For the purposes of the present description, the feature of the elastic yielding nature associated with element 66 implies that such an element has a greater elasticity and yielding nature than that of a remaining part of the locking device 60. For example, the locking device 60 is made of a metal material or hard plastics (e.g., ABS), while the elastically yielding element 66 is made of rubber or silicone.

Providing at least one elastically yielding element 66 allows an elastic recovery of any clearance and/or damping of vibrations. In the particular example shown in Figure 5, two elastically yielding elements 66 are provided, each fastened or coupled to a respective arm 63 of the locking device 60.

Similarly to the above description, at least one elastically yielding element (not shown in the drawings) can also be provided, which is interposed between the rideable saddle 40 and the locking device 60, for example between the rideable saddle 40 and the second end portion 62 of the locking device 60, when the locking device 60 is in the operating locking position. For example, elastically yielding elements can be arranged at the contact point or points p1, p2, or on the locking device 60 or the thrust element 45 (or on the thrust elements 45).

With reference to Figure 9, according to an advantageous embodiment, a through hole 68, such as a slot-shaped hole, is defined in the second end portion 62 of the locking device 60. The storage container 20 preferably comprises a protruding arm 69 fastened inside the container 20, for example fastened to an inner wall of container 20, which crosses the through hole 68 when in the locking position. Thereby, by providing a hole in the protruding arm 69 and using a security lock (not shown in the drawings), for example, it is optionally possible for a user to prevent the locking device 60 from being brought to the releasing position. The security is thus increased, making the unauthorized removal of the rechargeable battery 30 more complex, for example by third parties intending to unlawfully remove it when the rideable saddle vehicle 1 is in a parking state, for example.

Based on the explanation above, it is thus possible to understand how an electric or hybrid rideable saddle vehicle 1 of the type described above allows achieving the purposes indicated above with reference to the prior art.

## Claims

1. An electric or hybrid rideable saddle vehicle (1), comprising:
- a rechargeable battery (30);
- an electric or hybrid traction motor (8) which can be supplied by the rechargeable battery (30) to deliver a drive torque;
- a storage container (20) comprising a first housing seat (S1) which at least partially houses the rechargeable battery (30), wherein the rechargeable battery (30) is removably housed in the first housing seat (S1) so that the rechargeable battery (30) can be inserted into, and extracted from, the first housing seat (S1), the storage container (20) further comprising a locking device (60) adapted to lock the rechargeable battery (30) in the first housing seat (S1);
- a rideable saddle (40) which can be moved between a closing configuration, in which the rideable saddle (40) prevents access to the storage container (20), and an opening configuration, in which the rideable saddle (40) allows access to the storage container (20), the storage container (20) being arranged below the rideable saddle (40);
- the locking device (60) is adapted and configured to be moved to take an operating locking position and an operating releasing position; **characterized in that** :
- the locking device (60) is retained in the operating locking position only by means of a thrust force applied by the rideable saddle (15) when the rideable saddle (40) takes the closing configuration.

2. An electric or hybrid rideable saddle vehicle (1) according to claim 1, wherein when the rideable saddle (40) takes the closing configuration, the locking device (60) is pinched between a support base (41) of the rideable saddle (40) and a shell (21) of the storage container (20).

3. An electric or hybrid rideable saddle vehicle (1) according to claim 1 or 2, comprising a main body (2, 3, 4), and wherein the rideable saddle (40) is hinged to the main body (2, 3, 4) to be rotated about a first rotation axis (Y1), between two positions angularly spaced apart from each other, corresponding to the closing configuration and the opening configuration, respectively.

4. An electric or hybrid rideable saddle vehicle (1) according to claim 1, 2 or 3, wherein the locking device (60) is accommodated in the storage container (20) and has a first end portion (61) rotatably hinged to a wall of the storage container (20) and a second end portion (62) which, in the operating releasing position, is a free end portion.

5. An electric or hybrid rideable saddle vehicle (1) according to claim 4, wherein of the first end portion (61) and second end portion (62) of the locking device (60), the first end portion (61) is the furthest from the first rotation axis (Y1) when the locking device (60) is in the operating locking position.

6. An electric or hybrid rideable saddle vehicle (1) according to claim 4 or 5, wherein the first end portion (61) is rotatable about a second rotation axis (Y2) which is parallel to the first rotation axis (Y1).

7. An electric or hybrid rideable saddle vehicle (1) according to any one of claims 4 to 6, wherein the locking device (60) comprises at least one locking arm (63) which extends between the first end portion (61) and the second end portion (62) and which, in said operating locking position, applies a thrust force to the rechargeable battery (30).

8. An electric or hybrid rideable saddle vehicle (1) according to claim 7, wherein the first end portion (61) and the second end portion (62) of the locking device (60) project towards sides which are arranged to be mutually opposite with respect to the locking arm (63), so that the locking device (60) has an overall S- or step-shaped lateral profile.

9. An electric or hybrid rideable saddle vehicle (1) according to any one of the preceding claims, wherein the locking device (60) comprises at least one recess or through opening (65) which, in said operating locking position, accommodates, or is crossed by, a protruding part of the rechargeable battery (30), said protruding part being preferably a gripping handle (33).

10. An electric or hybrid rideable saddle vehicle (1) according to claims 7 and 9, wherein the locking device (60) comprises two locking arms (63) which are joined to each other on one side by the first end portion (61) and on another side by the second end portion (62).

11. An electric or hybrid rideable saddle vehicle (1) according to claims 9 and 10, wherein said recess or through opening (65) extends between the locking arms (63).

12. An electric or hybrid rideable saddle vehicle (1) according to any one of the preceding claims, wherein when the locking device (60) is in the operating locking position, at least one elastically yielding element (66) is interposed and sandwiched between the locking device (60) and the rechargeable battery (30).

13. An electric or hybrid rideable saddle vehicle (1) according to any one of the preceding claims, wherein the rechargeable battery (30) extends between a bottom portion (31) and a head portion (32) and wherein the storage container (20) comprises a second housing seat (S2A, S2B), adapted and configured to house at least one helmet (50), having a first housing portion (S2A) and a second housing portion (S2B) wherein when the rechargeable battery (30) is inserted into the first housing seat (S1), the first housing portion (S2A) at least partially extends over the head portion (32) of the rechargeable battery (30) and the second housing portion (S2B) at least partially extends laterally with respect to the head portion (32) of the rechargeable battery (30).

14. An electric or hybrid rideable saddle vehicle (1) according to claim 13, wherein the head portion (32) of the rechargeable battery (30) at least partially protrudes into the second housing seat (S2A, S2B), in particular into the first portion (S2A).

15. An electric or hybrid rideable saddle vehicle (1) according to any one of the preceding claims, comprising an elastic return means configured to push the locking device (60) towards the operating locking position.

## Patentansprüche

1. Elektrisches oder hybrides fahrbares Sattelfahrzeug (1), umfassend:
- eine wiederaufladbare Batterie (30);
- einen elektrischen oder hybriden Fahrmotor (8), der von der wiederaufladbaren Batterie (30) versorgt werden kann, um ein Antriebsmoment zu liefern;
- einen Lagerbehälter (20), der einen ersten Gehäusesitz (S1) umfasst, der die wiederaufladbare Batterie (30) mindestens teilweise aufnimmt, wobei die wiederaufladbare Batterie (30) abnehmbar in dem ersten Gehäusesitz (S1) untergebracht ist, so dass die wiederaufladbare Batterie (30) in den ersten Gehäusesitz (S1) eingesetzt und aus diesem herausgenommen werden kann, wobei der Lagerbehälter (20) ferner eine Sicherungsvorrichtung (60) umfasst, die so angepasst ist, dass sie die wiederaufladbare Batterie (30) in dem ersten Gehäusesitz (S1) sichert;
- einen fahrbaren Sattel (40), der zwischen einer Schließkonfiguration, in der der fahrbare Sattel (40) den Zugriff auf den Lagerbehälter (20) verhindert, und einer Öffnungskonfiguration, in der der fahrbare Sattel (40) den Zugriff auf den Lagerbehälter (20) ermöglicht, bewegt werden kann, wobei der Lagerbehälter (20) unterhalb des fahrbaren Sattels (40) angeordnet ist;
- wobei die Sicherungsvorrichtung (60) so angepasst und konfiguriert ist, dass sie bewegt werden kann, um eine Betriebssicherungsposition und eine Betriebsfreigabeposition einzunehmen; **dadurch gekennzeichnet, dass**:
- die Sicherungsvorrichtung (60) nur mittels einer von dem fahrbaren Sattel (15) angewendeten Schubkraft in der Betriebssicherungsposition gehalten wird, wenn der fahrbare Sattel (40) die Schließkonfiguration einnimmt.

2. Elektrisches oder hybrides fahrbares Sattelfahrzeug (1) nach Anspruch 1, wobei die Sicherungsvorrichtung (60) zwischen einer Stützbasis (41) des fahrbaren Sattels (40) und einer Hülle (21) des Lagerbehälters (20) eingeklemmt ist, wenn der fahrbare Sattel (40) die Schließkonfiguration einnimmt.

3. Elektrisches oder hybrides fahrbares Sattelfahrzeug (1) nach Anspruch 1 oder 2, umfassend einen Hauptkörper (2, 3, 4), wobei der fahrbare Sattel (40) an dem Hauptkörper (2, 3, 4) angelenkt ist, um um eine erste Drehachse (Y1) zwischen zwei winkelmäßig voneinander beabstandeten Positionen gedreht zu werden, die der Schließkonfiguration bzw. der Öffnungskonfiguration entsprechen.

4. Elektrisches oder hybrides fahrbares Sattelfahrzeug (1) nach Anspruch 1, 2 oder 3, wobei die Sicherungsvorrichtung (60) in dem Lagerbehälter (20) untergebracht ist und einen ersten Endabschnitt (61), der drehbar an einer Wand des Lagerbehälters (20) angelenkt ist, und einen zweiten Endabschnitt (62) aufweist, der in der Betriebsfreigabeposition ein freier Endabschnitt ist.

5. Elektrisches oder hybrides fahrbares Sattelfahrzeug (1) nach Anspruch 4, wobei von dem ersten Endabschnitt (61) und dem zweiten Endabschnitt (62) der Sicherungsvorrichtung (60) der erste Endabschnitt (61) am weitesten von der ersten Drehachse (Y1) entfernt ist, wenn sich die Sicherungsvorrichtung (60) in der Betriebssicherungsposition befindet.

6. Elektrisches oder hybrides fahrbares Sattelfahrzeug (1) nach Anspruch 4 oder 5, wobei der erste Endabschnitt (61) um eine zweite Drehachse (Y2) drehbar ist, die parallel zur ersten Drehachse (Y1) verläuft.

7. Elektrisches oder hybrides fahrbares Sattelfahrzeug (1) nach einem der Ansprüche 4 bis 6, wobei die Sicherungsvorrichtung (60) mindestens einen Sicherungsarm (63) umfasst, der sich zwischen dem ersten Endabschnitt (61) und dem zweiten Endabschnitt (62) erstreckt und der in der Betriebssicherungsposition eine Schubkraft auf die wiederaufladbare Batterie (30) ausübt.

8. Elektrisches oder hybrides fahrbares Sattelfahrzeug (1) nach Anspruch 7, wobei der erste Endabschnitt (61) und der zweite Endabschnitt (62) der Sicherungsvorrichtung (60) zu Seiten hin vorstehen, die in Bezug auf den Sicherungsarm (63) einander gegenüberliegend angeordnet sind, so dass die Sicherungsvorrichtung (60) insgesamt ein S- oder stufenförmiges Seitenprofil aufweist.

9. Elektrisches oder hybrides fahrbares Sattelfahrzeug (1) nach einem der vorhergehenden Ansprüche, wobei die Sicherungsvorrichtung (60) mindestens eine Aussparung oder durchgehende Öffnung (65) umfasst, die in der Betriebssicherungsposition einen vorstehenden Teil der wiederaufladbaren Batterie (30) aufnimmt oder von diesem durchquert wird, wobei der vorstehende Teil vorzugsweise ein Haltegriff (33) ist.

10. Elektrisches oder hybrides fahrbares Sattelfahrzeug (1) nach Anspruch 7 und 9, wobei die Sicherungsvorrichtung (60) zwei Sicherungsarme (63) umfasst, die auf einer Seite durch den ersten Endabschnitt (61) und auf einer anderen Seite durch den zweiten Endabschnitt (62) miteinander verbunden sind.

11. Elektrisches oder hybrides fahrbares Sattelfahrzeug (1) nach Anspruch 9 und 10, wobei sich die Aussparung oder durchgehende Öffnung (65) zwischen den Sicherungsarmen (63) erstreckt.

12. Elektrisches oder hybrides fahrbares Sattelfahrzeug (1) nach einem der vorhergehenden Ansprüche, wobei, wenn sich die Sicherungsvorrichtung (60) in der Betriebssicherungsposition befindet, mindestens ein elastisch nachgiebiges Element (66) zwischen der Sicherungsvorrichtung (60) und der wiederaufladbaren Batterie (30) angeordnet ist und dazwischen liegt.

13. Elektrisches oder hybrides fahrbares Sattelfahrzeug (1) nach einem der vorhergehenden Ansprüche, wobei sich die wiederaufladbare Batterie (30) zwischen einem Bodenabschnitt (31) und einem Kopfabschnitt (32) erstreckt und wobei der Lagerbehälter (20) einen zweiten Gehäusesitz (S2A, S2B) umfasst, der angepasst und konfiguriert ist, um mindestens einen Helm (50) aufzunehmen, mit einem ersten Gehäuseabschnitt (S2A) und einem zweiten Gehäuseabschnitt (S2B), wobei, wenn die wiederaufladbare Batterie (30) in den ersten Gehäusesitz (S1) eingesetzt ist, der erste Gehäuseabschnitt (S2A) sich zumindest teilweise über den Kopfabschnitt (32) der wiederaufladbaren Batterie (30) erstreckt und der zweite Gehäuseabschnitt (S2B) sich zumindest teilweise seitlich in Bezug auf den Kopfabschnitt (32) der wiederaufladbaren Batterie (30) erstreckt.

14. Elektrisches oder hybrides fahrbares Sattelfahrzeug (1) nach Anspruch 13, wobei der Kopfabschnitt (32) der wiederaufladbaren Batterie (30) mindestens teilweise in den zweiten Gehäusesitz (S2A, S2B), insbesondere in den ersten Abschnitt (S2A), hineinragt.

15. Elektrisches oder hybrides fahrbares Sattelfahrzeug (1) nach einem der vorhergehenden Ansprüche, umfassend ein elastisches Rückholmittel, das so konfiguriert ist, dass es die Sicherungsvorrichtung (60) in Richtung der Betriebssicherungsposition schiebt.

## Revendications

1. Véhicule électrique ou hybride (1) de type à selle à enfourcher, comprenant :
- une batterie rechargeable (30) ;
- un moteur de traction électrique ou hybride (8) qui peut être alimenté par la batterie rechargeable (30) pour délivrer un couple moteur ;
- un récipient de stockage (20) comprenant un premier support de logement (S1) qui abrite au moins partiellement la batterie rechargeable (30), la batterie rechargeable (30) étant logée de manière amovible dans le premier support de logement (S1) de sorte que la batterie rechargeable (30) puisse être insérée dans le premier support de logement (S1) et extraite de celui-ci, le récipient de stockage (20) comprenant en outre un dispositif de verrouillage (60) adapté pour verrouiller la batterie rechargeable (30) dans le premier support de logement (S1) ;
- une selle à enfourcher (40) qui peut être déplacée entre une configuration de fermeture, dans laquelle la selle à enfourcher (40) empêche l'accès au récipient de stockage (20), et une configuration d'ouverture, dans laquelle la selle à enfourcher (40) permet l'accès au récipient de stockage (20), le récipient de stockage (20) étant disposé sous la selle à enfourcher (40) ;
- le dispositif de verrouillage (60) est adapté et conçu pour être déplacé pour prendre une position de verrouillage de fonctionnement et une position de libération de fonctionnement ; **caractérisé en ce que** :
- le dispositif de verrouillage (60) est retenu dans la position de verrouillage de fonctionnement uniquement au moyen d'une force de poussée appliquée par la selle à enfourcher (15) lorsque la selle à enfourcher (40) prend la configuration de fermeture.

2. Véhicule électrique ou hybride (1) de type à selle à enfourcher selon la revendication 1, dans lequel lorsque la selle à enfourcher (40) prend la configuration de fermeture, le dispositif de verrouillage (60) est pincé entre une base de support (41) de la selle à enfourcher (40) et une coque (21) du récipient de stockage (20).

3. Véhicule électrique ou hybride (1) de type à selle à enfourcher selon la revendication 1 ou 2, comprenant un corps principal (2, 3, 4), et dans lequel la selle à enfourcher (40) est articulée sur le corps principal (2, 3, 4) pour être tournée autour d'un premier axe de rotation (Y1), entre deux positions angulairement espacées l'une de l'autre, correspondant respectivement à la configuration de fermeture et à la configuration d'ouverture.

4. Véhicule électrique ou hybride (1) de type à selle à enfourcher selon la revendication 1, 2 ou 3, dans lequel le dispositif de verrouillage (60) est logé dans le récipient de stockage (20) et présente une première partie d'extrémité (61) articulée de manière rotative sur une paroi du récipient de stockage (20) et une seconde partie d'extrémité (62) qui, dans la position de libération de fonctionnement, est une partie d'extrémité libre.

5. Véhicule électrique ou hybride (1) de type à selle à enfourcher selon la revendication 4, dans lequel parmi la première partie d'extrémité (61) et la seconde partie d'extrémité (62) du dispositif de verrouillage (60), la première partie d'extrémité (61) est la plus éloignée du premier axe de rotation (Y1) lorsque le dispositif de verrouillage (60) est dans la position de verrouillage de fonctionnement.

6. Véhicule électrique ou hybride (1) de type à selle à enfourcher selon la revendication 4 ou 5, dans lequel la première partie d'extrémité (61) peut tourner autour d'un second axe de rotation (Y2) qui est parallèle au premier axe de rotation (Y1).

7. Véhicule électrique ou hybride (1) de type à selle à enfourcher selon l'une quelconque des revendications 4 à 6, dans lequel le dispositif de verrouillage (60) comprend au moins un bras de verrouillage (63) qui s'étend entre la première partie d'extrémité (61) et la seconde partie d'extrémité (62) et qui, dans ladite position de verrouillage de fonctionnement, applique une force de poussée à la batterie rechargeable (30).

8. Véhicule électrique ou hybride (1) de type à selle à enfourcher selon la revendication 7, dans lequel la première partie d'extrémité (61) et la seconde partie d'extrémité (62) du dispositif de verrouillage (60) font saillie vers des côtés qui sont disposés pour être en regard l'un de l'autre par rapport au bras de verrouillage (63), de sorte que le dispositif de verrouillage (60) présente un profil latéral global en forme de S ou de marche.

9. Véhicule électrique ou hybride (1) de type à selle à enfourcher selon l'une quelconque des revendications précédentes, dans lequel le dispositif de verrouillage (60) comprend au moins un évidement ou une ouverture traversante (65) qui, dans ladite position de verrouillage de fonctionnement, loge, ou est traversé(e) par, une partie saillante de la batterie rechargeable (30), ladite partie saillante étant de préférence une poignée de préhension (33).

10. Véhicule électrique ou hybride (1) de type à selle à enfourcher selon les revendications 7 et 9, dans lequel le dispositif de verrouillage (60) comprend deux bras de verrouillage (63) qui sont reliés l'un à l'autre d'un côté par la première partie d'extrémité (61) et de l'autre côté par la seconde partie d'extrémité (62).

11. Véhicule électrique ou hybride (1) de type à selle à enfourcher selon les revendications 9 et 10, dans lequel ledit évidement ou ladite ouverture traversante (65) s'étend entre les bras de verrouillage (63).

12. Véhicule électrique ou hybride (1) de type à selle à enfourcher selon l'une quelconque des revendications précédentes, dans lequel, lorsque le dispositif de verrouillage (60) est dans la position de verrouillage de fonctionnement, au moins un élément élastique (66) est interposé et pris en sandwich entre le dispositif de verrouillage (60) et la batterie rechargeable (30).

13. Véhicule électrique ou hybride (1) de type à selle à enfourcher selon l'une quelconque des revendications précédentes, dans lequel la batterie rechargeable (30) s'étend entre une partie inférieure (31) et une partie tête (32) et dans lequel le récipient de stockage (20) comprend un second support de logement (S2A, S2B), adapté et conçu pour loger au moins un casque (50), ayant une première partie de logement (S2A) et une seconde partie de logement (S2B), dans lequel, lorsque la batterie rechargeable (30) est insérée dans le premier support de logement (S1), la première partie de logement (S2A) s'étend au moins partiellement sur la partie tête (32) de la batterie rechargeable (30) et la seconde partie de logement (S2B) s'étend au moins partiellement latéralement par rapport à la partie tête (32) de la batterie rechargeable (30).

14. Véhicule électrique ou hybride (1) de type à selle à enfourcher selon la revendication 13, dans lequel la partie tête (32) de la batterie rechargeable (30) fait au moins partiellement saillie dans le second support de logement (S2A, S2B), en particulier dans la première partie (S2A).

15. Véhicule électrique ou hybride (1) de type à selle à enfourcher selon l'une quelconque des revendications précédentes, comprenant un moyen de rappel élastique conçu pour pousser le dispositif de verrouillage (60) vers la position de verrouillage de fonctionnement.
